# EUROPEAN PATENT APPLICATION

(11) **EP 4 137 730 A1**
(43) Date of publication of application: **22.02.2023**
(21) Application number: 21849534.9
(22) Date of filing: 21.05.2021
(51) Int. Cl.: F16L 1/00, E03F 3/04, E03F 7/00, F16B 21/16, F16L 1/038, F16L 9/22, F16L 55/18

(54) **PIPE REHABILITATION CONSTRUCTION METHOD**

(30) Priority: 27.07.2020 JP 2020126405
(71) Applicant: Shonan Gosei-Jushi Seisakusho K.K., Kanagawa 254-0807 (JP)
(72) Inventor: KAMIYAMA, Takao, Hiratsuka-shi, Kanagawa 254-0807 (JP); KARASHIMA, Tomoki, Hiratsuka-shi, Kanagawa 254-0807 (JP); ISHIDA, Makoto, Hiratsuka-shi, Kanagawa 254-0807 (JP)
(74) Representative: Kronthaler, Schmidt & Coll.
(86) International application number: PCT/JP2021/019440
(87) International publication number: WO 2022/024519

(57) **Abstract**

A coupling pin 20 is inserted through insertion holes of both end plates such that a head portion 20a thereof abuts an end plate 104 of one segment 1a and inclined surfaces S3 of notch portions 20c and 20d protrude from an end plate 105 of the other segment 1b. A clamp member 30 is disposed at a position where the inclined surface T2' of a leg portion 30b faces the inclined surface S3 of the notch portion, and the leg portion of the clamp member is press-fitted into the notch portion such that the inclined surface thereof is brought into surface contact with the inclined surface of the notch portion. The end plates of both the segments are clamped and both the segments are coupled in the circumferential direction due to movement of the clamp member toward the segment end plate direction corresponding to the angle of inclination of the leg portion, the movement being generated by the press-fitting of the leg portion of the clamp member.

## Description

### Technical Field

The present invention relates to a pipe rehabilitation construction method for installing a rehabilitation pipe inside an existing pipe in which segments are coupled in the circumferential direction and in the longitudinal direction, each of the segments being a member formed integrally from a plastic material and comprising an inner surface plate constituting an inner circumferential surface and side plates and end plates provided upright on peripheral edges of the inner surface plate.

### Background Art

In cases in which a sewage pipe or another pipeline buried underground has deteriorated through aging, a pipe lining method has been proposed and practiced in which a lining is provided to the inner circumferential surface thereof to repair the pipeline without excavating it from the ground. In cases in which large-diameter pipelines are to be rehabilitated, segments are used each of which comprises an inner surface plate constituting an inner circumferential surface, and side plates and end plates provided upright on the peripheral edges of the inner surface plate, these plates being integrally formed from a plastic material.

One segment is aligned at the end plate with the end plate of another segment, and both the segments are coupled in the circumferential direction by passing bolts through insertion holes formed in each end plate and screwing them with nuts to tighten the end plates. A predetermined number of segments are coupled in the circumferential direction to assemble a ring-shaped pipe unit (Patent Documents 1 and 2 below).

One pipe unit thus assembled is coupled to another pipe unit in the longitudinal direction by passing coupling bolts through insertion holes formed in the side plates and inner plates of the segments and screwing them into nuts that are fixed to the other segments.

The pipe units are sequentially coupled in the longitudinal direction and laid inside an existing pipe as a rehabilitation pipe. A gap between the rehabilitation pipe and the existing pipe is then filled with a filler such as grout. Once the filler is hardened, a composite pipe can be constructed which comprises the existing pipe, the filler and the rehabilitation pipe.

### Prior Art Documents

### Patent Documents

Patent Document 1: JP 2011-12803 A
Patent Document 2: JP 2016-176571 A

### Summary of Invention

### Problems to be Solved

However, the circumferential coupling of the segments described in Patent Documents 1 and 2 was performed by screwing metal bolts and nuts together using an air tool such as a compressor, so that the air tool was required at the work site. As a result, work efficiency was reduced.

An object of the present invention is to solve these problems and provide a pipe rehabilitation construction method that can easily couple segments in the circumferential direction without using bolts or nuts.

### Means for Solving the Problems

The present invention provides a pipe rehabilitation method for an existing pipe in which segments are coupled in the circumferential direction and in the longitudinal direction to assemble a rehabilitation pipe inside the existing pipe to rehabilitate the existing pipe, each of the segments having an inner surface plate, side plates provided upright on both sides of the inner surface plate and end plates provided upright on both ends of the inner surface plate, the method comprising:
aligning the end plate of one segment with the end plate of the other segment coupled to the one segment in the circumferential direction such that coupling insertion holes formed in the end plates coincide with each other;
preparing a coupling pin having a head portion that cannot pass through the insertion holes and a cylindrical portion that can pass through the insertion holes, the cylindrical portion being provided on both circumferential sides thereof with notch portions of the same shape having inclined surfaces formed that are inclined toward the distal end of the cylindrical portion;
inserting the coupling pin through the insertion holes of both the end plates such that the head portion of the coupling pin abuts the end plate of the one segment and the inclined surfaces of the notch portions thereof protrude from the end plate of the other segment;
preparing a clamp member having two leg portions of the same shape that can be inserted into the notch portions that protrude from the other segment, each of the leg portions having at one surface a flat surface and at the other surface an inclined surface inclined at the same angle of inclination as the inclined surface of the notch portion;
disposing the clamp member at a position where the inclined surfaces of the leg portions face the inclined surfaces of the notch portions and press-fitting the leg portions thereof into the notch portions such that the inclined surfaces of the leg portions are brought into surface contact with the inclined surfaces of the notch portions; and
clamping the end plates of both the segments to couple both the segments in the circumferential direction due to movement of the clamp member toward the end plate direction that is generated by the press-fitting.

### Effect of the Invention

According to the present invention, the inclined leg portions of the clamp member are press-fitted into the notch portions such that the inclined surfaces thereof are brought into surface contact with the inclined surfaces of the notch portions of the coupling pin, and the end plates of both the segments are clamped due to movement of the clamp member toward the segment end plate direction that is generated by the press-fitting. Therefore, increasing the press-fitting also increases a clamping force for the end plates of both the segments. This makes it possible to firmly couple the segments in the circumferential direction.

### Brief Description of Drawings

FIG. 1 is a perspective view showing the structure of a segment used in assembling a rehabilitation pipe;
FIG. 2a is a perspective view showing a coupling pin for coupling the segments in the circumferential direction;
FIG. 2b is a front view of the coupling pin as viewed from the arrow direction in Fig. 2a;
FIG. 2c is a top view of the coupling pin as viewed from the arrow direction in FIG. 2a;
FIG. 3a is a perspective view showing a clamp member used together with the coupling pin when the segments are coupled in circumferential direction;
Fig. 3b is a bottom view of the clamp member as viewed from the arrow direction in Fig. 3a;
Fig. 3c is a rear view of the clamp member as viewed from the arrow direction in Fig. 3a;
Fig. 3d is a right-side view of the clamp member as viewed from the arrow direction in Fig. 3a;
Fig. 4 is a perspective view showing a state in which the coupling pin is passed through an insertion hole provided in the end plate of the segment;
Fig. 5 is a perspective view showing a state in which the clamp member is press-fitted onto the coupling pin to couple the segments in the circumferential direction;

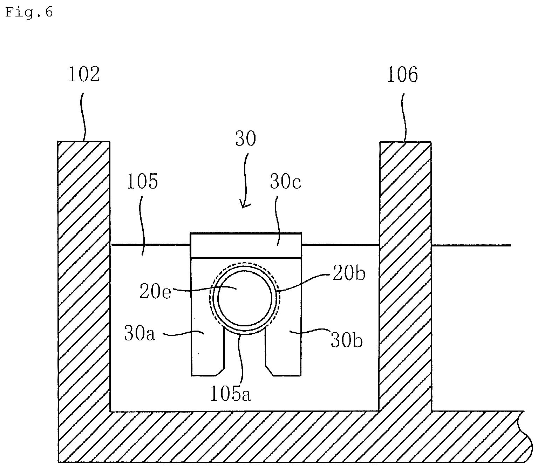

Fig. 6 is a front view showing that the clamp member is press-fitted onto the coupling pin;
Fig. 7 is an illustrative view showing a step in which the clamp member is press-fitted onto the coupling pin;
Fig. 8 is a perspective view showing a state in which the segments are coupled in the circumferential direction to assemble a pipe unit;
Fig. 9 is an illustrative view showing a state in which coupling bolts are used to couple the segments of the pipe unit in the longitudinal direction; and
Fig. 10 is an illustrative view showing a state in which the pipe units are coupled to install the rehabilitation pipe inside the existing pipe.

### Mode of Carrying Out the Invention

The present invention will now be described with references to embodiments illustrated in the accompanying drawings. The present invention is suitable for rehabilitating or repairing large-diameter existing pipes such as sewage pipes, water supply pipes, tunnels, or agricultural irrigation channels. In the present embodiment, the rehabilitation pipes are described as having a circular cross-section profile perpendicular to the longitudinal direction. However, it shall be apparent that the present invention can be applied to a rehabilitation pipe having a square or another non-circular shape. Also, in addition to shapes in which the cross-section profile is closed as a pipe, a horseshoe-shape, a semi-circular shape, a U-shape or the like in which one side is open can also be considered to be a pipe, and the present invention can also be applied thereto.

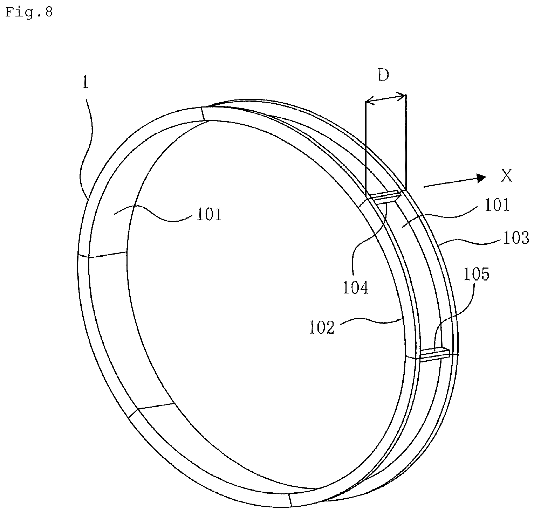

In the present specifications, the longitudinal direction refers to the direction indicated by arrow X extending in the longitudinal direction of a pipe unit 10 in FIG. 8, and the circumferential direction refers to the direction of the circumference of the circle forming the pipe unit 10.

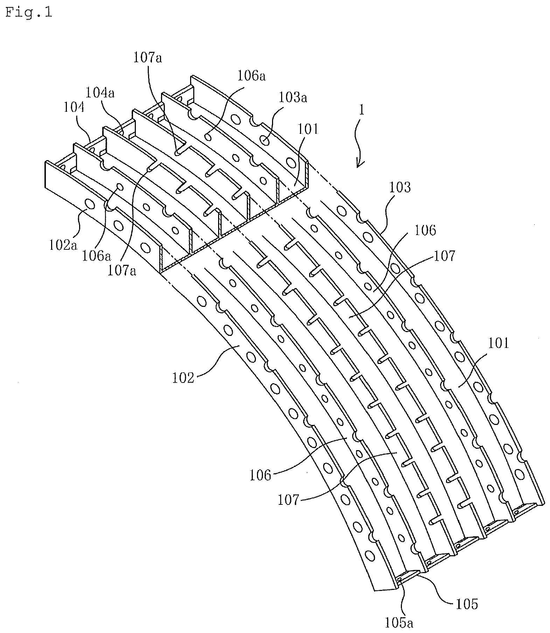

FIG. 1 shows the structure of a segment 1 for a rehabilitation pipe (hereafter simply referred to as "segment"). The segment 1 is an integrally formed block-shaped member made from a plastic material, comprising an inner surface plate 101 constituting an inner circumferential surface of the rehabilitation pipe, side plates 102, 103 with the same thickness provided vertically upright on both sides extending in the circumferential direction of the inner surface plate 101, and end plates 104, 105 provided vertically upright on both ends extending in the longitudinal direction of the inner surface plate 101.

In order to reinforce the mechanical strength of the segment 1, a plurality of inner plates 106, 107 having a shape similar to and the same thickness as the side plates 102, 103 are provided upright at equal intervals and parallel thereto on the upper surface of the inner surface plate 101 inside the side plates 102, 103.

The segment 1 has a shape that is curved as an arc representing a predetermined angle that equally divides the circumference, e.g., a 60° arc that divides the circumference into sixths. However, the segment may be shaped as, e.g., a cuboid or a shape that is bent so as to have a curved right angle depending on the cross-section profile or the size of the existing pipe or the location of the existing pipe to be repaired.

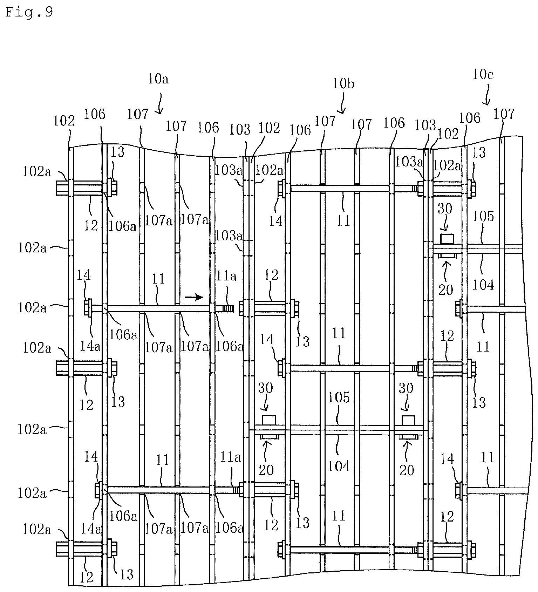

In order to couple the segments 1 in the longitudinal direction, a plurality of circular insertion holes 102a, 103a for admitting insertion of a coupling bolt 11 and a nut 12 (FIG. 9) are provided at equal intervals along the circumference on the side plates 102, 103. A plurality of circular insertion holes 106a for admitting insertion of the coupling bolt 11 are also provided at equal intervals on the inner plate 106. A plurality of notches 107a are provided at equal intervals on the inner plate 107 to provide a function as an insertion hole through which the coupling bolt can pass. The insertion holes 102a, 103a, 106a and the notches 107a are located at coinciding positions along the circumferential direction.

The inner plate 101, the side plates 102, 103, the end plates 104, 105, and the inner plates 106, 107 are all made of the same transparent, translucent or opaque plastic and are integrally molded using known molding techniques.

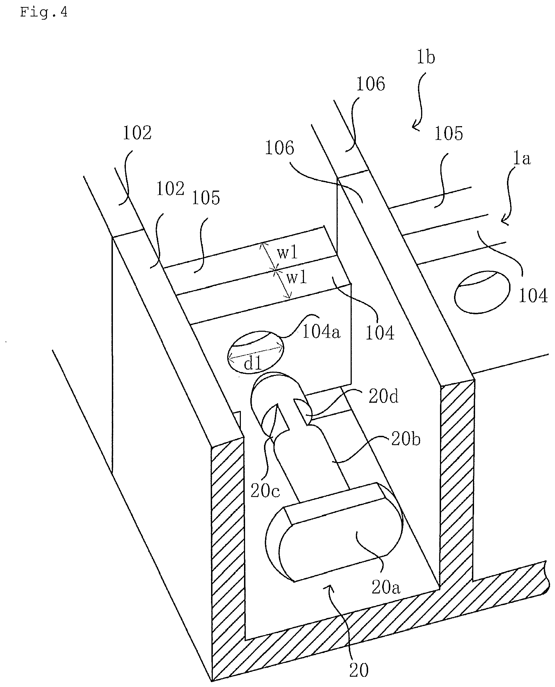

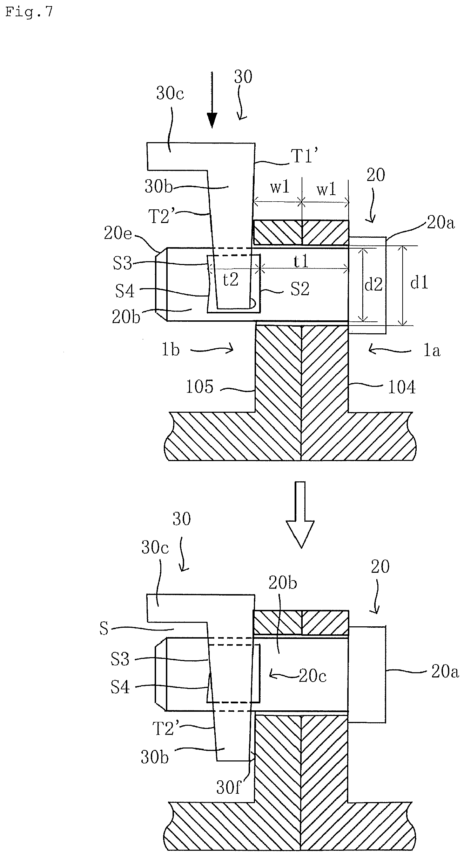

The end plates 104 and 105 are members disposed between the side plates 102 and 103 at both ends of the segment as viewed in the circumferential direction. A plurality of circular insertion holes 104a and 105a are provided on the end plates 104 and 105 for admitting insertion of couplers to couple the segments 1 in the circumferential direction. As shown in FIGS. 4 and 7, the width (thickness) of the end plates 104 and 105 in the circumferential direction is w1, and the diameter of the insertion holes 104a and 105a is d1, respectively.

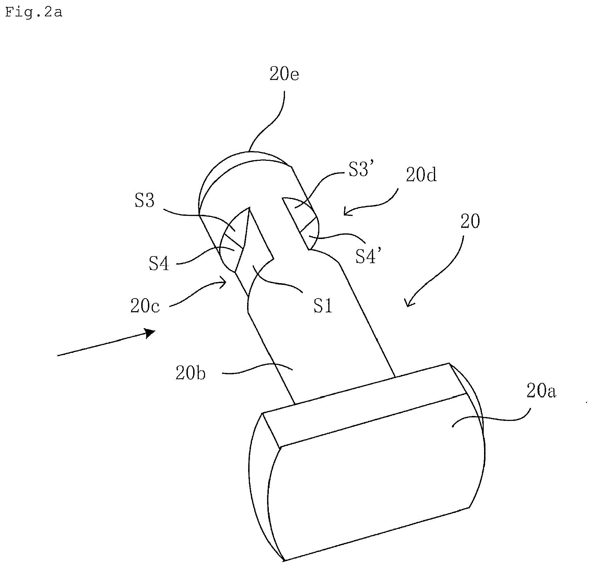

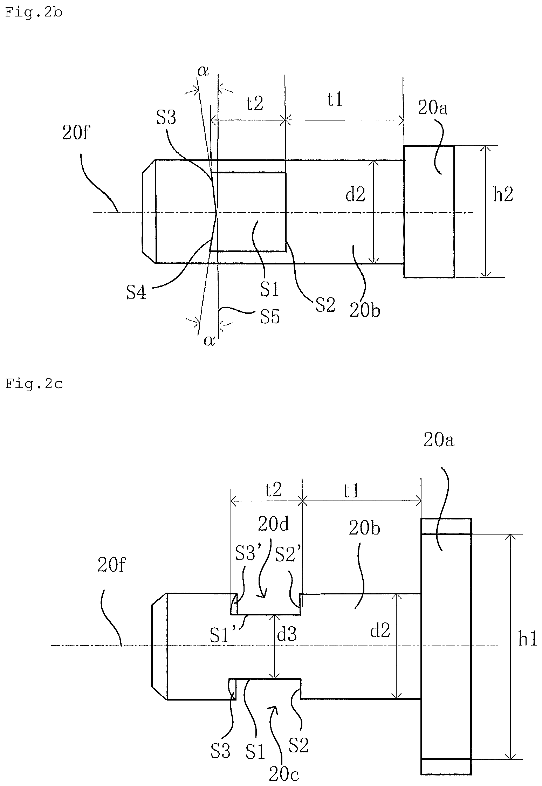

FIG. 2a is a perspective view showing a coupling pin 20 as a coupler for coupling the segments in the circumferential direction, and FIGS. 2b and 2c are, respectively, front and top views of the coupling pin 20 as viewed from the arrow direction in FIG. 2a.

Like the segment 1, the coupling pin 20 is made of, for example, plastic such as rigid polyvinyl chloride (PVC), and has a flat head portion 20a curved on both sides and a cylindrical portion 20b integrally formed therewith with an inclined portion 20e formed at the end thereof opposite the head portion 20a. The diameter d2 of the cylindrical portion 20b is smaller than the diameter d1 of the insertion holes 104a and 105a of the end plates 104 and 105, so that the cylindrical portion 20b can pass through the insertion holes 104a and 105a, but the head portion 20a is of such a size that it cannot pass through the insertion holes 104a and 105a.

The cylindrical portion 20b of the coupling pin 20 is provided at both circumferential ends with notch portions 20c and 20d which are symmetrical with respect to a symmetrical plane passing through the central axis 20f of the cylindrical portion 20b (a plane passing through the central axis 20f and perpendicular to the paper surface in FIG. 2c). The notch portion 20c has a vertical surface S1 parallel to the symmetrical plane and a rear surface S2 perpendicular to the vertical surface S1 on the side of the head portion 20a with a surface opposite the rear surface S2 forming inclined surfaces S3 and S4 inclined toward the distal end of the cylindrical portion. The inclined surfaces S3 and S4 are, as viewed from FIG. 2b, symmetrical with respect to a plane that is perpendicular to the paper surface and passes through the central axis 20f of the cylindrical portion 20b. The inclined surfaces S3 and S4 are in surface contact with the inclined surfaces of both leg portions of a clamp member described later and are inclined toward the distal end side of the cylindrical portion at an angle of α with respect to a plane S5 perpendicular to the symmetrical plane.

On the other hand, the notch portion 20d is plane-symmetrical with the notch portion 20c and has a vertical surface S1', a rear surface S2' and inclined surfaces S3' and S4' that are, respectively, plane-symmetrical with the vertical surface S1, the rear surface S2 and the inclined surfaces S3 and S4 of the notch portion 20c. The vertical surfaces S1 and S1' of the notch portions 20c and 20d are parallel and the distance d3 between the vertical surfaces S1 and S1' is of such a size that the leg portions of the clamp member described later can be inserted into the notch portions 20c and 20d.

As shown in FIG. 7, the distance t1 between the rear surfaces S2, S2' of the notch portions 20c, 20d and the head portion 20a is shorter than twice the plate thickness w1 of the end plate of the segment so that the rear surface of the clamp member described later can contact the end plate of the segment. The width t2 at the upper part of the notch portions 20c and 20d is such that the distal ends of the leg portions of the clamp member can be inserted into the notch portions 20c and 20d. The head portion 20a of the coupling pin 20 has the width h1 different from the height h2, in the embodiment, h1 > h2 so as to be capable of discriminating whether the vertical surfaces S1 and S1' of the notch portions 20c and 20d is parallel to the side plate 102 and the inner plate 106 when the coupling pin 20 is inserted into the insertion holes 104a and 105a.

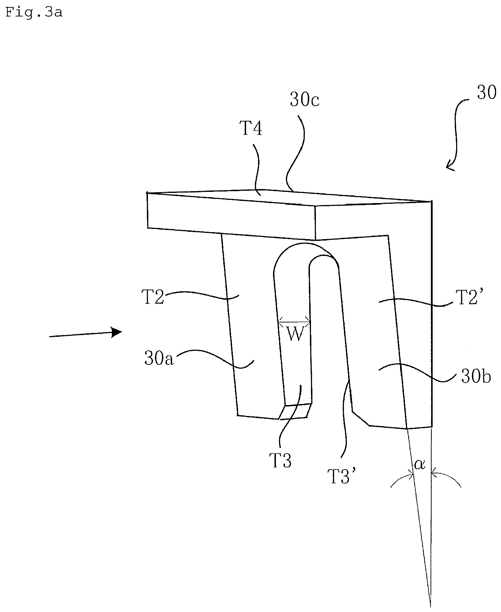

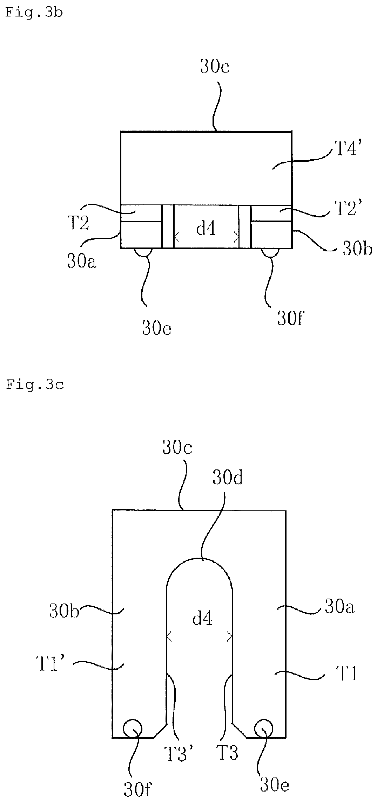

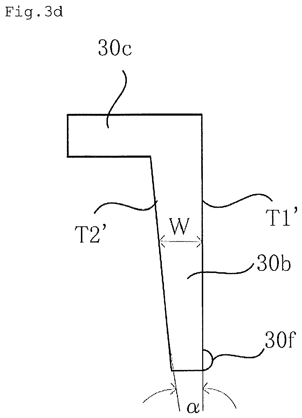

FIG. 3a is a perspective view showing a clamp member 30 for clamping the end plates of the segment. FIGS 3b, 3c and 3d are, respectively, bottom, rear and right-side views of the clamp member 30 as viewed in the arrow direction in FIG. 3a.

The clamp member 30 has two leg portions 30a and 30b of the same shape and a press portion 30c at the top and is integrally formed of the same plastic as the coupling pin 20. The leg portions 30a and 30b form on one surface back surfaces T1 and T1' and on the other surface inclined surfaces T2 and T2' inclined at the same angle α of inclination as the inclined surfaces S3 and S3' of the notch portion 20c.

The facing surfaces of the leg portions 30a, 30b of the clamp member 30 form parallel vertical surfaces T3, T3' and the distance d4 between the vertical surfaces T3, T3' of the leg portions is equal to or slightly greater than the distance d3 between the vertical surfaces S1, S1' of the notch portions 20c, 20d. The distance W between the back surfaces T1, T1' of the leg portions 30a, 30b and the inclined surfaces T2, T2' thereof is shorter at the lower part than at the upper part according to the angle of inclination α of the leg portions 30a, 30b so that the distal ends of the leg portions 30a and 30b can be inserted into the notch portions 20c and 20d. The leg portions 30a and 30b form a curved portion 30d at the upper part corresponding to the shape of the cylindrical portion 20b of the coupling pin 20.

The clamp member 30 can be press-fitted onto the coupling pin 20 by hitting the upper surface T4 of the press portion 30c thereof by hand or with a hammer. A gap S (FIG. 7) is formed between the lower surface T4' of the press portion 30c and the cylindrical portion 20b of the coupling pin 20. A force is applied to the lower surface of the press portion 30c through the gap S to remove the clamp member 30 from the coupling pin 20.

The leg portions 30a and 30b are provided at the lower part with integrally formed small protrusions 30e and 30f. The protrusions 30e and 30f strongly press against the end plate of the segment when the clamp member 30 is press-fitted onto the coupling pin 20. This prevents the clamp member 30 from coming off the coupling pin 20 due to friction with the end plate. Although the protrusions 30e and 30f are hemispherical, they may be of other shapes, such as rectangular.

Next, a method will be described in which the coupling pin 20 and the clamp member 30 are used to couple the segments in the circumferential direction.

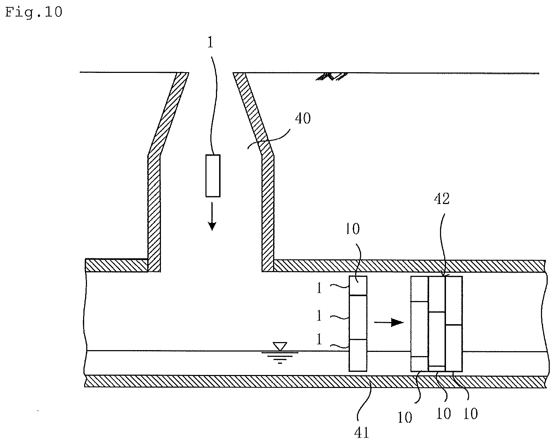

The segments are carried into a manhole 40 (FIG. 10). As shown in FIG. 4, the end plate 104 of one segment 1a is brought into contact with the end plate 105 of the other segment 1b that is coupled to the segment 1a in the circumferential direction, and is aligned therewith so that the coupling insertion holes 104a and 105a formed in the end plates 104 and 105 of the segments 1a and 1b coincide with each other.

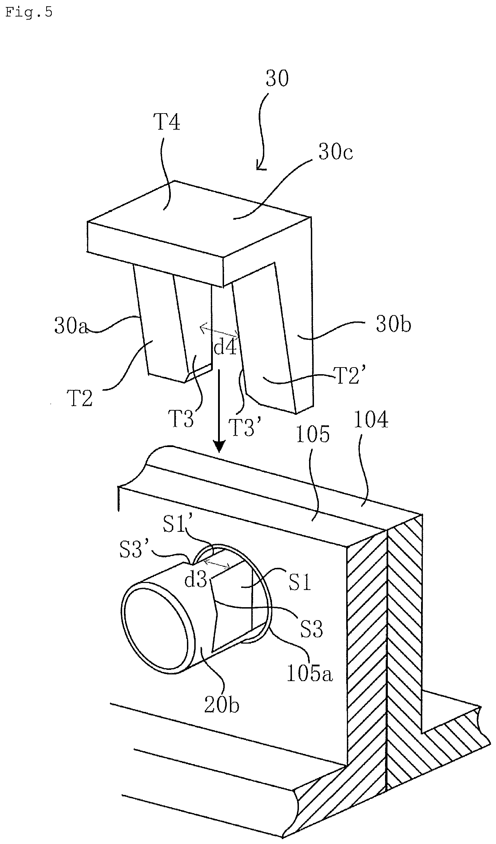

Subsequently, the coupling pin 20 is inserted through the insertion holes 104a, 105a of the segments 1a, 1b with the symmetrical plane of the notch portions 20c, 20d oriented to be parallel to the side plate 102 and the inner plate 106 of the segment. This insertion is, as shown in FIGS. 5 and 7, performed until the head portion 20a of the coupling pin 20 abuts against the end plate 104 of the segment 1a and the inclined surfaces S3 and S3' of the notch portions 20c and 20d protrude from the end plate 105 of the other segment 1b.

In this state, the clamp member 30 is, as shown in FIG. 5, disposed so that the inclined surfaces T2, T2' of the leg portions 30a, 30b face the inclined surfaces S3, S3' of the notch portions 20c, 20d. Subsequently, the leg portions 30a and 30b of the clamp member 30 is, as shown in the lower part of FIG. 7, inserted into the notch portions 20c and 20d until the inclined surfaces T2 and T2' thereof come into surface contact with the inclined surfaces S3 and S3' of the notch portions 20c and 20d.

As shown in the lower part of FIG. 7, the leg portions 30a, 30b of the clamp member 30 are press-fitted into the notch portions 20c and 20d with the inclined surfaces T2, T2' of the leg portions 30a, 30b being in surface contact with the inclined surfaces S3, S3' of the notch portions 20c, 20d. The clamp member 30 then moves toward the end plate of the segment according to the inclination angle of the inclined surfaces of the leg portions 30a and 30b, so that the end plates 104, 105 of both the segments 1a, 1b can be clamped with a clamping force corresponding to the pressing force. When the press-fitting is strengthened and the clamp member is moved further downward, the clamping force for the end plates of both the segments will also increase, allowing the segments to be firmly coupled in the circumferential direction.

In the present embodiment, the leg portions 30a and 30b of the clamp member 30 form the inclined surfaces T2 and T2' on one surface thereof and have a wedge shape tapered downward, so that pressing the leg portions 30a and 30b into the notch portions 20c and 20d provides the same effect as driving a wedge into the gap between the notch portion and the end plate of the segment. This can strengthen the coupling of the end plates of the segments. In addition, the inclined surfaces S3, S3' of the notch portions 20c, 20d contact the inclined surfaces T2, T2' of the leg portions 30a, 30b at the same angle of inclination. This increases a contact area and allows a clamping force to be generated over a wide range on the end plate of the segment.

The leg portions 30a and 30b are provided at the lower part with the protrusions 30e and 30f, which strongly press against the end plate 105 of the segment 1b when the clamp member 30 is press-fitted onto the coupling pin 20. This can prevent the clamp member 30 from coming off from the coupling pin 20 due to friction with the end plate 105.

In the present embodiment, the inclined surfaces S3 and S4 (S3' and S4') of the notch portions 20c and 20d are plane-symmetrical with respect to a plane passing through the central axis 20f of the coupling pin 20 and perpendicular to the press-fitting direction (a plane passing through the central axis 20f and perpendicular to the paper surface as viewed in FIG. 2b). Therefore, when the coupling pin 20 is turned upside down and the clamp member 30 is press-fitted onto the coupling pin 20, the inclined surfaces T2 and T2' of the leg portions 30a and 30b have the same angle of inclination as the surfaces S4 and S4' of the notch portions 20c and 20d and they come into surface contact. This provides the same effect as a state in which the coupling pin 20 is not turned upside down. This allows an increase in a degree of freedom in the insertion orientation of the coupling pin 20 into the end plate.

As shown in FIG. 9, the circumferential coupling of the segments is accomplished by coupling two end plates 104 and 105 between the side plate 102 (103) and the inner plate 106 adjacent to the side plate. However, in addition, the end plates 104 and 105 between the inner plates 106 and 107 or between the inner plates 107 may also be coupled. By thus increasing the number of coupling points, the coupling of the segments in the circumferential direction can be further strengthened.

By sequentially coupling the segments in the circumferential direction around the full circumference, it is possible to assemble a ring-shaped pipe unit 10 having a predetermined length D in the longitudinal direction X as shown in FIG. 8. The outside diameter of the pipe unit 10 is slightly smaller than the inside diameter of the existing pipe to be rehabilitated. In FIG. 8, the inner surface plate 101, the side plates 102, 103, and the end plates 104, 105, which are the principal structural members of the segment 1, are shown. In order to prevent the drawing from becoming complicated, the inner plates 106, 107 and other reinforcement structures are not shown.

As shown in FIG. 9, the pipe units 10 are sequentially coupled in the longitudinal direction. In FIG.9, a plurality of metallic nuts 12 are secured to the inner plates 106 of the segments of pipe units 10a, 10b, 10c using coupling bolts 13. The nut 12 is longer in the longitudinal direction than the interval between the side plate 102 and the inner plate 106 and extends from the side plate 102 by a distance equal to or greater than the thickness of the other side plate 103 of the segment. A coupling bolt 11 is a cylindrical long bolt having at one end a screw portion 11a screwed into the nut 12 and at the other end a head portion 14 with a flange 14a.

FIG. 9 shows a state in which the segments of the pipe units 10b and 10c have already been coupled in the longitudinal direction and the segment of the pipe unit 10a is being coupled to the segment of the pipe unit 10b. When coupling the segment of the pipe unit 10a to the segment of the pipe unit 10b, the nut 12 protruding from the side plate 102 of the segment of the pipe unit 10b is passed through the insertion hole 103a of the side plate 103 of the segment of the pipe unit 10a to butt the side plates 103, 102 of the segments of both the pipe units 10a, 10b.

Subsequently, the coupling bolt 11 is passed through the insertion hole 102a of the side plate 102, the insertion holes 106a of the inner plates 106 and the notches 107a of the inner plates 107, and the screw portion 11a is screwed into the nut 12 secured to the segment 1b. This couples the coupling bolt 11 and the nut 12. The coupling bolt 11 is further screwed into the nut 12 until the flange 14a of the head portion 14 presses against the leftmost inner plate 106 of the segment 1a. This bolts and couples the segments of the pipe units 10a and 10b in the longitudinal direction.

Thus, the segments of the pipe unit are coupled in the longitudinal direction to the segments of the other pipe unit that has already been coupled. This allows the pipe units to be coupled to an arbitrary length in the longitudinal direction.

After the pipe units 10 are sequentially coupled in the longitudinal to lay a rehabilitation pipe 42 inside an existing pipe 41 as shown in FIG. 10, a gap between the rehabilitation pipe 42 and the existing pipe 41 is filled with a filler (not shown) such as grout and the filler is solidified. Solidifying the filler allows a composite pipe to be constructed which comprises the existing pipe, the filler and the rehabilitated pipe.

### Description of Symbols

1 segment
10 pipe unit
20 coupling pin
20a head portion
20b cylindrical portion
20c, 20d notch portion
20e inclined portion
20f central axis
30 clamp member
30a, 30b leg portion
30c press portion
30d curved portion
30e, 30f protrusion
104, 105 end plate
S3, S3' inclined surface of the notch portion of the coupling pin
S4, S4' inclined surface of the notch portion of the coupling pin
T2, T2' inclined surface of the leg portion of the clamp member

## Claims

1. A pipe rehabilitation method for an existing pipe in which segments are coupled in the circumferential direction and in the longitudinal direction to assemble a rehabilitation pipe inside the existing pipe to rehabilitate the existing pipe, each of the segments having an inner surface plate, side plates provided upright on both sides of the inner surface plate and end plates provided upright on both ends of the inner surface plate, the method comprising:
aligning the end plate of one segment with the end plate of the other segment coupled to the one segment in the circumferential direction such that coupling insertion holes formed in the end plates coincide with each other;
preparing a coupling pin having a head portion that cannot pass through the insertion holes and a cylindrical portion that can pass through the insertion holes, the cylindrical portion being provided on both circumferential sides thereof with notch portions of the same shape having inclined surfaces formed that are inclined toward the distal end of the cylindrical portion;
inserting the coupling pin through the insertion holes of both the end plates such that the head portion of the coupling pin abuts the end plate of the one segment and the inclined surfaces of the notch portions thereof protrude from the end plate of the other segment;
preparing a clamp member having two leg portions of the same shape that can be inserted into the notch portions that protrude from the other segment, each of the leg portions having at one surface a flat surface and at the other surface an inclined surface inclined at the same angle of inclination as the inclined surface of the notch portion;
disposing the clamp member at a position where the inclined surfaces of the leg portions face the inclined surfaces of the notch portions and press-fitting the leg portions thereof into the notch portions such that the inclined surfaces of the leg portions are brought into surface contact with the inclined surfaces of the notch portions; and
clamping the end plates of both the segments to couple both the segments in the circumferential direction due to movement of the clamp member toward the end plate direction that is generated by the press-fitting.

2. A pipe rehabilitation method according to claim 1, wherein the inclined surfaces of the notch portions are plane-symmetrical with respect to a plane that passes through the central axis of the coupling pin and is perpendicular to the press-fitting direction.

3. A pipe rehabilitation method according to claim 1 or 2, wherein a gap is formed between the clamp member and the cylindrical portion of the coupling pin such that the clamp member can be removed from the coupling pin.

4. A pipe rehabilitation method according to claim 1 or 2, wherein the clamp member is provided at the lower ends of both the leg portions with protrusions for frictional contact with the end plate of the other segment.
